# FASCICULE DE BREVET EUROPEEN

(11) **EP 3 061 350 B1**
(45) Date de publication et mention de la délivrance du brevet: **23.01.2019**
(21) Numéro de dépôt: 16175106.0
(22) Date de dépôt: 17.06.2016
(51) Int. Cl.: A23C 19/09, A23C 19/14, A01J 25/16

(54) **PROCÉDÉ DE FABRICATION D'UN FROMAGE AROMATISÉ**
HERSTELLUNGSVERFAHREN FÜR EINEN AROMATISIERTEN KÄSE
METHOD FOR MANUFACTURING A FLAVOURED CHEESE

(30) Priorité: 08.04.2016 FR 1653137
(43) Date de publication de la demande: 31.08.2016
(73) Titulaire: SAVENCIA SA, 78220 Viroflay (FR)
(72) Inventeur: De Praeter, Hans, 8940 Geluwe (BE)
(74) Mandataire: Gevers & Orès

(56) Documents cités:
- EP-A1- 0 492 716
- EP-A1- 0 845 215
- WO-A1-2007/128872
- WO-A1-2011/157909
- WO-A2-01/80655
- AT-U1- 5 242
- DE-A1- 1 492 593
- DE-A1- 2 813 274
- DE-A1- 10 317 030
- DE-A1-102010 019 884
- DE-A1-102014 010 171
- DE-C- 589 661
- JP-B2- 4 603 995
- US-A1- 2017 367 356
- DATABASE FSTA [Online] INTERNATIONAL FOOD INFORMATION SERVICE (IFIS), FRANkFURT-MAIN, DE; 1985, TAMIME A Y: "Some aspects of the production of wine flavoured cheese.", XP002759952, Database accession no. FS-1985-02-P-0086 & DAIRY INDUSTRIES INTERNATIONAL, vol. 49, no. 7, 1984, pages 30-31,
- Sroka M.: "PI 480 Tandem/PI 600 Tandem/ PI 600 Duo/PI 750 Duo", Internet , 7 April 2016 (2016-04-07), Retrieved from the Internet: URL:https://www.guenther-maschinenbau.de/e n/prodcat/injectors/

## Description

L'invention concerne un procédé de fabrication d'un fromage aromatisé.

Les étapes de fabrication d'un fromage sont bien connues. Ainsi, et à titre d'exemple, pour réaliser un fromage à pâte pressée non cuite, on réalise généralement la fabrication du fromage en cuve, puis un moulage en bac de pré-pressage, un pressage dans un moule, un égouttage, un saumurage et enfin un affinage.

Certains fromages sont aromatisés.

Le document DE 1020 140 10171 (D1) propose un procédé pour fabriquer un fromage aromatisé, par exemple avec de la bière. A cet effet, on met un préfromage dans une solution aromatisée. L'aromatisation s'effectue donc au cours de la fabrication du fromage.

Dans le FR 2 475 361 (D2), on propose également un procédé pour fabriquer un fromage aromatisé. L'aromatisation s'effectue au cours de la fabrication du fromage, et plus précisément juste avant coagulation du lait caillé. Ce document précise que cette approche permet de s'assurer que les arômes soient emprisonnés dans le fromage, obtenu après coagulation. Ce document précise par ailleurs que cette approche permet en outre une répartition homogène des additifs dans le fromage.

L'inconvénient principal des procédés proposés dans les documents D1 ou D2 est qu'il convient de prévoir, relativement en amont, dans le processus de fabrication du fromage l'introduction des arômes. Cela n'est pas idéal sur le plan des coûts de fabrication. Par ailleurs, il y a une perte importante des arômes.

De manière générale, il est donc préférable de pouvoir différencier un fromage donné d'un fromage du même type, mais aromatisé, le plus tard possible au cours de la fabrication du fromage, avant l'affinage.

Une solution pour injecter un liquide dans un fromage est d'injecter le produit souhaité sous forme liquide avec des buses, sous haute pression. C'est par exemple ce qui est proposé dans le document EP 0 492 716 (D3).

Cette approche génère cependant des trous dans le fromage qui peuvent gêner un consommateur, habitué à un fromage du même type sans trous ou canaux. On propose alors de boucher ces trous ou canaux, au moins partiellement, avec une mise sous pression du fromage et/ou une mise en température.

Un cas particulier est notamment la fabrication d'un fromage bleu. Ainsi, dans le document WO 2011/157909 (D4), on propose plusieurs procédés de fabrication d'un fromage avec développement de *penicillium roqueforti.* Dans le cas d'espèce, il s'agit de faire en sorte que de la moisissure bleue soit présente dans le fromage. Un piquage du fromage est alors nécessaire pour réaliser des trous ou canaux dans le fromage afin que la moisissure bleue puisse se développer (oxygène). Ce piquage peut être mis à profit pour injecter la moisissure bleue, en introduisant la moisissure bleue dans le fromage pendant ou après le piquage. En variante, on peut aussi introduire la moisissure bleue au cours de la fabrication du fromage, comme cela est proposé dans les documents D1 et D2, le piquage du fromage restant nécessaire pour créer des trous ou canaux afin que la moisissure bleue se développe. Néanmoins, dans ce cas, l'aromatisation n'est pas réalisée avec l'injection, l'aromatisation s'épanouissant en effet avec le développement du bleu. JP4603995 décrit la production d'un fromage aromatisé à croûte fleurie. Les trous issus de l'injection d'un liquide aromatisé sont couverts par la croûte fleurie.

Un objectif de l'invention est de proposer un procédé de fabrication d'un fromage aromatisé ne présentant pas l'un au moins des inconvénients précités.

Pour atteindre cet objectif, l'invention propose un procédé de fabrication un procédé de fabrication d'un fromage aromatisé, comprenant une étape a) de fabrication du fromage, caractérisé en ce qu'il comprend, après cette étape de fabrication du fromage, les étapes suivantes, dans l'ordre :
b) piquage du fromage avec des aiguilles creuses animées d'un mouvement de va-et-vient par rapport au fromage, ledit mouvement comportant une phase d'entrée desdites aiguilles dans le fromage suivie d'une phase de sortie desdites aiguilles du fromage et, injection d'un liquide aromatisé dans le fromage avec lesdites aiguilles ;
c) saumurage du fromage ; et
d) mise sous vide du fromage.

Ce procédé pourra comprendre l'une au moins des caractéristiques suivantes, prises seules ou en combinaison :
- les aiguilles sont réparties de sorte que la densité d'aiguilles par unité de surface de fromage est comprise entre 0,3 et 0,8 aiguilles/cm² ;
- les aiguilles présentant chacune un diamètre interne compris entre 1,5mm et 3,5mm, de préférence entre 1,5mm et 2,5mm, l'injection de liquide aromatisé lors de l'étape b) s'effectue à une pression comprise entre 0,5 bar et 4 bars, de préférence entre 0,5 bar et 1,5 bar et la vitesse relative des aiguilles par rapport au fromage lors de l'étape b) n'excède pas 13cm/s, voire 10cm/s ;
- l'injection de liquide aromatisé dans le fromage est réalisée après que les aiguilles ont atteint une profondeur déterminée, non nulle, dans l'épaisseur du fromage ;
- pour mettre en oeuvre l'étape b), les aiguilles parcourent une distance, prise à partir de la surface d'entrée des aiguilles dans le fromage, qui est strictement inférieure à l'épaisseur du fromage ;
- pour mettre en oeuvre l'étape b), l'injection de liquide aromatisé s'effectue pendant la phase d'entrée des aiguilles dans le fromage et/ou pendant la phase de sortie des aiguilles du fromage ;
- l'étape b) est réalisée selon les sous-étapes suivantes :
   ∘ réaliser la phase d'entrée des aiguilles dans le fromage de la façon suivante : piquer le fromage avec les aiguilles jusqu'à ce que les aiguilles atteignent une profondeur déterminée (P_{D}), non nulle, dans l'épaisseur (E) du fromage puis injecter le liquide aromatisé dans le fromage tout en déplaçant les aiguilles plus profondément dans le fromage jusqu'à une profondeur (P_{LIM}) strictement inférieure à l'épaisseur du fromage ; puis
   ∘ réaliser la phase de sortie des aiguilles du fromage, sans réaliser d'injection de liquide aromatisé ;
- la vitesse des aguilles par rapport au fromage pendant la phase d'entrée n'excède pas 8cm/s, voire 7cm/s, voire 6 cm/s ;
- l'étape b) n'est réalisée qu'une seule fois pour un fromage donné ;
- l'étape c) de saumurage est réalisée par trempage du fromage obtenu à l'issue de l'étape b) dans un bac comportant de la saumure ;
- l'étape c) de saumurage est mise en oeuvre au minimum 30mn après la fin de l'étape b), et de préférence au moins 60mm, voire au moins 90mm après la fin de l'étape b).

D'autres caractéristiques de l'invention ressortiront de la description détaillée ci-après faite en référence aux dessins annexés qui représentent, respectivement:
- la figure 1 est une vue générale, en perspective, d'une machine permettant la mise en oeuvre du procédé selon l'invention ;
- la figure 2 est une vue agrandie, également en perspective, d'une partie de la machine représentée sur la figure 1 ;
- la figure 3 représente différentes étapes, selon les figures 3(a) à 3(g) d'un exemple de mise en oeuvre du procédé selon l'invention.

De manière générale, l'invention propose un procédé de fabrication d'un fromage aromatisé, comprenant une étape a) de fabrication du fromage et des étapes subséquentes, mises en oeuvre après la fabrication de ce fromage, pour obtenir un fromage aromatisé.

A titre d'exemple, on peut aromatiser ce fromage avec de la bière. Typiquement, on cherche alors à obtenir une quantité de bière correspondant à 3% ou 4% du fromage complètement fini, i.e. après affinage, prêt pour la vente.

Par ailleurs, le procédé selon l'invention s'intéresse plus particulièrement, bien que non exclusivement, à la fabrication d'un fromage aromatisé à pâte pressée, par exemple à pâte pressée non cuite. Dans ce cas, l'étape a) met en oeuvre les sous-étapes suivantes :
a₁) fabrication en cuve
a₂) moulage en bac de pré-pressage
a₃) pressage en moule ; et
a₄) égouttage.

Après la fabrication du fromage, qu'il soit à pâte pressée ou non, le procédé selon l'invention comporte les étapes suivantes, dans l'ordre :
b) piquage du fromage avec des aiguilles creuses animées d'un mouvement de va-et-vient par rapport au fromage, ledit mouvement comportant une phase d'entrée desdites aiguilles dans le fromage suivie d'une phase de sortie desdites aiguilles du fromage et, injection d'un liquide aromatisé dans le fromage avec lesdites aiguilles ;
c) saumurage du fromage ; et
d) mise sous vide du fromage.

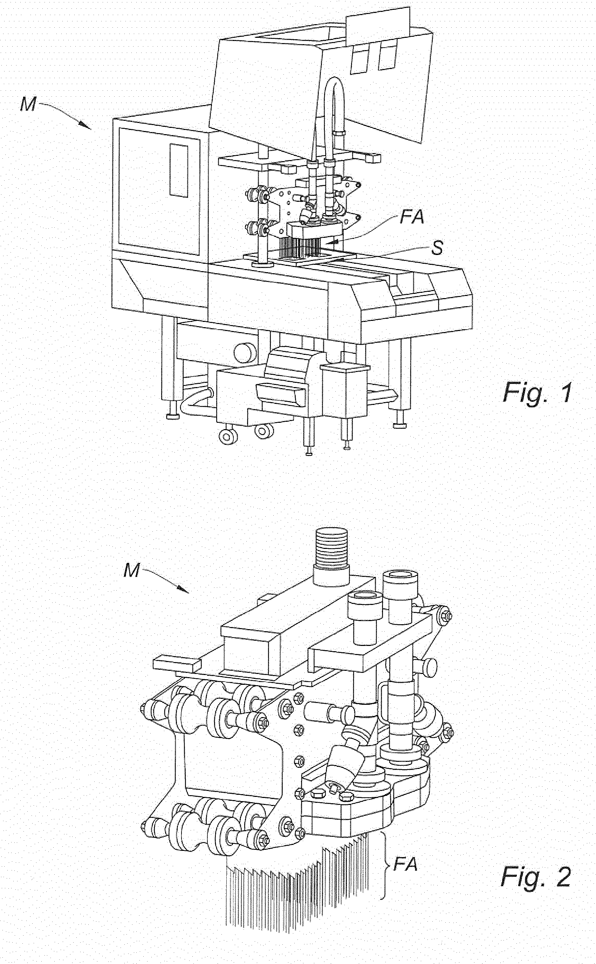

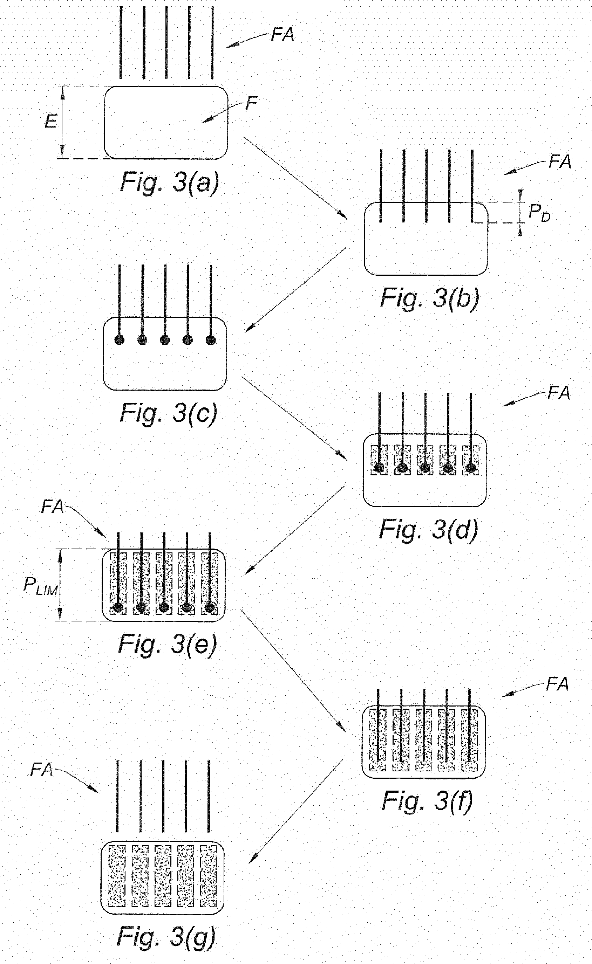

Une machine susceptible d'être utilisée pour mettre en oeuvre l'étape b) est représentées sur les figures 2 et 3. La machine M est en soi classique. Elle comprend notamment un faisceau d'aiguilles FA qui peut être animé d'un mouvement de va-et-vient (vertical) par rapport au fromage destiné à être disposé sous les aiguilles. Le fromage est posé à plat sur un support S. Toutefois, dans le cadre de l'invention, la densité des aiguilles et leurs dimensions peuvent faire l'objet d'une sélection particulière pour améliorer le procédé de fabrication selon l'invention, comme cela est précisé dans la suite de la description.

En effet et avantageusement, les aiguilles sont réparties de sorte que la densité d'aiguilles par unité de surface de fromage est comprise entre 0,3 et 0,8 aiguilles/cm². Ceci permet une répartition relativement homogène du liquide aromatisé dans le fromage.

Avantageusement, les aiguilles présentent chacune un diamètre interne compris entre 1,5mm et 3,5mm, de préférence entre 1,5mm et 2,5mm. Par ailleurs et avantageusement, l'injection de liquide aromatisé lors de l'étape b) s'effectue à une pression comprise entre 0,5 bar et 4 bars, de préférence entre 0,5 bar et 1,5 bar. Enfin, pour mettre en oeuvre l'étape b), la vitesse des aiguilles par rapport au fromage (généralement en position fixe) n'excède pas 13cm/s, voire 10cm/s.

Le contrôle de la quantité de liquide aromatisé injecté se fait par la vitesse de déplacement des aiguilles par rapport au fromage, ce qui incidemment détermine le temps d'injection du liquide aromatisé dans le formage), le diamètre interne des aiguilles et la pression d'injection de liquide.

De plus, plusieurs facteurs interviennent pour éviter les fissures dans le fromage. Plus le diamètre interne des aiguilles est faible et plus les risques de fissures sont faibles. Plus la pression d'injection est faible et plus les risques de fissures sont faibles. De manière analogue, plus la vitesse de déplacement des aiguilles par rapport au fromage est faible et plus les risques de fissures sont faibles.

Les valeurs mentionnées ci-dessus (diamètre interne des aiguilles, pression et vitesse) permettent ce contrôle du débit d'injection et évitent les fissures, ou du moins les limitent fortement.

Avantageusement, pour mettre en oeuvre l'étape b), l'injection de liquide aromatisé dans le fromage est réalisée après que les aiguilles ont atteint une profondeur déterminée, non nulle, dans l'épaisseur du fromage. En effet, cela permet de limiter les risques de propagation d'une fissure dans le fromage, à partir de la surface d'entrée des aiguilles dans le fromage. De manière similaire, toujours pour mettre en oeuvre l'étape b), les aiguilles parcourent une distance, prise à partir de la surface d'entrée des aiguilles dans le fromage, qui est strictement inférieure à l'épaisseur du fromage. Là également, l'intérêt de cette caractéristique est de limiter les risques de propagation d'une fissure, mais ici, au niveau de la surface du fromage qui est opposée à la surface d'entrée des aiguilles dans le fromage.

Il convient de noter que, dans le cadre de l'invention, l'injection de liquide aromatisé peut s'effectuer pendant la phase d'entrée des aiguilles dans le fromage ou, en variante pendant la phase de sortie des aiguilles du fromage ou selon une autre variante, à la fois pendant la phase d'entrée et pendant la phase de sortie des aiguilles du fromage.

Avantageusement, l'injection de liquide aromatisé s'effectue pendant la seule phase d'entrée des aiguilles dans le fromage.

Ainsi, et comme représenté sur la figure 3 annexée, l'étape b) est avantageusement réalisée selon les sous-étapes suivantes :
- réaliser la phase d'entrée des aiguilles dans le fromage de la façon suivante :
   - piquer le fromage avec les aiguilles jusqu'à ce que les aiguilles atteignent une profondeur P_{D} déterminée, non nulle, dans l'épaisseur E du fromage F (on part de la position de la figure 3(a) et on aboutit à la position de la figure 3(b)); puis
   - injecter le liquide aromatisé dans le fromage tout en déplaçant les aiguilles plus profondément dans le fromage (positions représentées sur les figures 3(c) et 3(d)) jusqu'à une profondeur P_{Lim} strictement inférieure à l'épaisseur E du fromage F (position de la figure 3(e)); puis
- réaliser la phase de sortie des aiguilles du fromage (positions des figures 3(f) et 3(g)), sans injection de liquide aromatisé dans le fromage pendant la phase de sortie des aiguilles du fromage.

Bien souvent, la quantité de liquide aromatisé injectée lors de la phase d'entrée est suffisante, en particulier pour obtenir 3 à 4% en masse de quantité de bière dans la fromage fini, et il n'est donc pas nécessaire d'injecter plus de liquide aromatisé pendant la phase de sortie des aiguilles du fromage.

On pourra, comme indiqué précédemment, faire autrement, à savoir en réalisant l'injection seulement au cours de la phase de sortie des aiguilles du fromage ou pendant les phases d'entrée et de sortie des aiguilles du fromage.

En pratique, ce choix dépendra du type de fromage considéré, en fonction de sa nature et de la quantité de liquide aromatisé que l'on souhaite y introduire.

Pendant la phase d'entrée des aiguilles dans le fromage, on pourra prévoir une vitesse relative des aiguilles par rapport au fromage n'excédant avantageusement pas 8cm/s, voire 7cm/s, voire encore 6cm/s ; en particulier lorsque l'injection de liquide aromatisé dans le fromage est réalisée au cours de cette phase.

Une vitesse plus importante peut être envisagée lors de la phase de sortie, les trous ou canaux ayant déjà été formés et ce, en particulier lorsqu'aucune injection de liquide aromatisé est effectué pendant cette phase de sortie. Dans ce cas, et comme indiqué précédemment, la vitesse de sortie des aiguilles, par rapport au fromage n'excède pas 13 cm/s, voire 10cm/s.

En pratique, l'étape b) ne sera toutefois avantageusement réalisée qu'une seule fois pour un fromage donné.

L'étape c) de saumurage pourra être réalisée par trempage du fromage obtenu à l'issue de l'étape b) dans un bac comportant de la saumure.

L'étape c) de saumurage sera avantageusement mise en oeuvre pendant au moins 19 heures lorsque le liquide aromatisé qui a été injecté ne comporte pas de sel ou saumure. Le temps de saumurage conditionne le taux de sel qui sera présent dans le formage et n'a pas d'impact sur le bouchage des trous ou canaux formés lors du piquage. Ce temps minimum permet de gérer le taux de sel minimum dans le formage fini. En variante, on peut prévoir que de la saumure soi également présente dans le liquide aromatisé. Dans cette variante, l'étape c) de saumurage peut alors avoir une durée plus courte.

En ce qui concerne l'étape d) de mise sous vide, on pourra emballer le fromage obtenu à l'issue de l'étape c) dans un emballage étanche à l'air, par exemple un film plastique. Par ailleurs, l'étape d) de mise sous vide sera avantageusement réalisée pendant au moins 3 semaines, et ce pour s'assurer que les trous ou canaux formés dans le fromage par l'étape de piquage soient refermés ou quasi-refermés. On obtient alors un fromage aromatisé ne présentant pas ou quasi pas de trous ou canaux, contrairement aux fromages aromatisés obtenus par injection de liquide réalisée sous haute pression avec des buses (cf. par exemple, le document D4). Cette mise sous vide du fromage (étape d)) s'effectuera par ailleurs de préférence à une température de 14°C, pour assurer un développement convenable des germes, le choix de cette température n'intervenant pas dans la fermeture des tours ou canaux formés dans le fromage lors du piquage.

Avantageusement, l'étape d) de mise sous vide pourra être suivie d'une étape d'affinage s'effectuant à l'air libre, en soi tout à fait classique.

Enfin, dans certains cas, on pourra prévoir un temps d'attente entre l'étape b) et l'étape c). En particulier, l'étape c) de saumurage pourra être mise en oeuvre au minimum 30mn après la fin de l'étape b), et de préférence au moins 60mm, voire au moins 90mm après la fin de l'étape b).

Cette attente laisse le temps au liquide aromatisé de se diffuser au sein du fromage et de laisser les trous ou canaux formés par le piquage vides ou au moins partiellement vides de liquide aromatisé. La conséquence est un affaissement local du fromage au niveau du trou ou canal formé qui a tendance à boucher partiellement ce trou ou canal lié au piquage du fromage par les aiguilles. En conséquence, cela peut apporter une aide pour boucher les canaux lors de l'étape d) de mise sous vide. On améliore ainsi l'aspect final du fromage aromatisé.

Nous allons maintenant décrire un exemple de réalisation de l'invention.

Cet exemple s'appuie sur la schéma de la figure 3.

Le fromage présente une épaisseur d'environ 10cm. Il s'agit en l'occurrence d'un fromage à pâte pressée, non cuite.

La densité d'aiguilles est de 0,54 aiguilles/cm² de surface de fromage. Les aiguilles, creuses, sont identiques et le diamètre interne de chaque aguille est de 2mm.

La vitesse d'entrée des aiguilles dans le fromage est de 5,38 cm/s.

L'injection de liquide aromatisé (bière) n'est réalisée que pendant la phase d'entrée des aiguilles dans le fromage, à une pression de 0,8 bar. Cette injection commence par ailleurs lorsque les aiguilles ont atteint une profondeur P_{D} = 2cm et se termine lorsque les aiguilles ont atteint la profondeur P_{LIM} = 9,5cm, ce qui correspond à une distance du fond du fromage (E- P_{LIM}) de 0,5cm.

La vitesse de sortie des aiguilles du fromage est de 13cm/s. Aucune injection de liquide aromatisé n'est effectuée pendant cette phase de sortie.

Puis, une fois les aiguilles sorties du fromage, ce dernier est stockée temporairement, sur une durée de 45mn.

Le saumurage est ensuite réalisée, pendant 19 heures.

La mise sous vide du fromage a ensuite été réalisée, sou film plastique, pendant 3 semaines, en l'occurrence à une température de 14°C.

On a alors pu constater que le produit présentait un aspect tout à fait convenable, à savoir quasiment sans trous ou canaux.

Un affinage classique a enfin été réalisé.

La quantité de bière dans le fromage était par ailleurs de 3%, en masse, du fromage fini.

## Revendications

1. Procédé de fabrication d'un fromage aromatisé, comprenant une étape a) de fabrication du fromage, **caractérisé en ce qu'**il comprend, après cette étape de fabrication du fromage, les étapes suivantes, dans l'ordre :
b) piquage du fromage avec des aiguilles creuses animées d'un mouvement de va-et-vient par rapport au fromage, ledit mouvement comportant une phase d'entrée desdites aiguilles dans le fromage suivie d'une phase de sortie desdites aiguilles du fromage et, injection d'un liquide aromatisé dans le fromage avec lesdites aiguilles ;
c) saumurage du fromage ; et
d) mise sous vide du fromage.

2. Procédé selon la revendication 1, dans lequel les aiguilles sont réparties de sorte que la densité d'aiguilles par unité de surface de fromage est comprise entre 0,3 et 0,8 aiguilles/cm².

3. Procédé selon l'une des revendications précédentes, dans lequel, les aiguilles présentant chacune un diamètre interne compris entre 1,5mm et 3,5mm, de préférence entre 1,5mm et 2,5mm, l'injection de liquide aromatisé lors de l'étape b) s'effectue à une pression comprise entre 0,5 bar et 4 bars, de préférence entre 0,5 bar et 1,5 bar et la vitesse relative des aiguilles par rapport au fromage lors de l'étape b) n'excède pas 13cm/s, voire 10cm/s.

4. Procédé selon l'une des revendications précédentes, dans lequel, pour mettre en oeuvre l'étape b), l'injection de liquide aromatisé dans le fromage est réalisée après que les aiguilles ont atteint une profondeur déterminée (P_{D}), non nulle, dans l'épaisseur (E) du fromage.

5. Procédé selon l'une des revendications précédentes, dans lequel, pour mettre en oeuvre l'étape b), les aiguilles parcourent une distance (P_{LIM}), prise à partir de la surface d'entrée des aiguilles dans le fromage, qui est strictement inférieure à l'épaisseur du fromage.

6. Procédé selon l'une des revendications précédentes, dans lequel, pour mettre en oeuvre l'étape b), l'injection de liquide aromatisé s'effectue pendant la phase d'entrée des aiguilles dans le fromage et/ou pendant la phase de sortie des aiguilles du fromage.

7. Procédé selon l'une des revendications précédentes, dans lequel l'étape b) est réalisée selon les sous-étapes suivantes :
- réaliser la phase d'entrée des aiguilles dans le fromage de la façon suivante :
• piquer le fromage avec les aiguilles jusqu'à ce que les aiguilles atteignent une profondeur déterminée (P_{D}), non nulle, dans l'épaisseur (E) du fromage ; puis
• injecter le liquide aromatisé dans le fromage tout en déplaçant les aiguilles plus profondément dans le fromage jusqu'à une profondeur (P_{LIM}) strictement inférieure à l'épaisseur du fromage ; puis
- réaliser la phase de sortie des aiguilles du fromage, sans réaliser d'injection de liquide aromatisé.

8. Procédé selon la revendication précédente, dans lequel la vitesse des aguilles par rapport au fromage pendant la phase d'entrée n'excède pas 8cm/s, voire 7cm/s, voire 6 cm/s.

9. Procédé selon l'une des revendications précédentes, dans lequel l'étape b) n'est réalisée qu'une seule fois pour un fromage donné.

10. Procédé selon l'une des revendications précédentes, dans lequel l'étape c) de saumurage est réalisée par trempage du fromage obtenu à l'issue de l'étape b) dans un bac comportant de la saumure.

11. Procédé selon l'une des revendications précédentes, dans lequel l'étape c) de saumurage est mise en oeuvre au minimum 30mn après la fin de l'étape b), et de préférence au moins 60mm, voire au moins 90mm après la fin de l'étape b).

12. Procédé selon l'une des revendications précédentes, dans lequel, pour réaliser l'étape d) de mise sous vide, on emballe le fromage obtenu à l'issue de l'étape c) dans un emballage étanche à l'air, par exemple un film plastique.

13. Procédé selon l'une des revendications précédentes, dans lequel l'étape d) de mise sous vide est réalisée pendant au moins 3 semaines, par exemple à une température de 14°C.

14. Procédé selon l'une des revendications précédentes, dans lequel l'étape d) de mise sous vide est suivie d'une étape d'affinage s'effectuant à l'air libre.

15. Procédé selon l'une des revendications précédentes, dans lequel, le fromage aromatisé à fabriquer étant un fromage à pâte pressée, l'étape a) met en oeuvre les sous-étapes suivantes :
a₁) fabrication en cuve
a₂) moulage en bac de pré-pressage
a₃) pressage en moule ; et
a₄) égouttage.

## Patentansprüche

1. Verfahren zur Herstellung eines aromatisierten Käses, das einen Schritt a) der Herstellung des Käses umfasst, **dadurch gekennzeichnet, dass** es nach diesem Schritt der Herstellung des Käses die folgenden Schritte umfasst, in der Reihenfolge:
b) Einstechen des Käses mit Hohlnadeln, die in Bezug auf den Käse in einer Hin- und Her-Bewegung angetrieben werden, wobei die Bewegung eine Eindringphase der Nadeln in den Käse, gefolgt von einer Austrittsphase der Nadeln aus dem Käse beinhalten, und Injektion einer aromatisierten Flüssigkeit mit den Nadeln in den Käse;
c) Pökeln des Käses; und
d) Evakuieren des Käses.

2. Verfahren nach Anspruch 1, wobei die Nadeln so verteilt sind, dass die Nadeldichte pro Flächeneinheit des Käses im Bereich zwischen 0,3 und 0,8 Nadeln/cm² beträgt.

3. Verfahren nach einem der vorstehenden Ansprüche, wobei die Nadeln jede einen Innendurchmesser im Bereich zwischen 1,5 mm und 3,5 mm, vorzugsweise zwischen 1,5 mm und 2,5 mm, aufweisen, wobei die Injektion von aromatisierter Flüssigkeit beim Schritt b) mit einem Druck im Bereich zwischen 0,5 Bar und 4 Bar, vorzugsweise zwischen 0,5 Bar und 1,5 Bar, erfolgt, und die relative Geschwindigkeit der Nadeln in Bezug auf den Käse beim Schritt b) 13 cm/s, beziehungsweise 10 cm/s, nicht übersteigt.

4. Verfahren nach einem der vorstehenden Ansprüche, wobei, um den Schritt b) umzusetzen, die Injektion von aromatisierter Flüssigkeit in den Käse ausgeführt wird, nachdem die Nadeln eine bestimmte Tiefe (P_{D}) von ungleich Null in der Dicke (E) des Käses erreicht haben.

5. Verfahren nach einem der vorstehenden Ansprüche, wobei, um den Schritt b) umzusetzen, die Nadeln eine Strecke (P_{LlM}), ab der Eindringfläche der Nadeln in den Käse genommen, zurücklegen, die strikt kleiner ist als die Dicke des Käses.

6. Verfahren nach einem der vorstehenden Ansprüche, wobei, um den Schritt b) umzusetzen, die Injektion von aromatisierter Flüssigkeit während der Eindringphase der Nadeln in den Käse und/oder während der Austrittsphase der Nadeln aus dem Käse erfolgt.

7. Verfahren nach einem der vorstehenden Ansprüche, wobei der Schritt b) gemäß den folgenden Teilschritten ausgeführt wird:
- Ausführen der Eindringphase der Nadeln in den Käse in der folgenden Weise:
• Einstechen des Käses mit den Nadeln, bis die Nadeln eine bestimmte Tiefe (P_{D}) von ungleich Null in der Dicke (E) des Käses erreichen; anschließend
• Injizieren der aromatisierten Flüssigkeit in den Käse bei gleichzeitigem Versetzen der Nadeln tiefer in den Käse bis zu einer Tiefe (P_{LlM}), die strikt kleiner als die Dicke des Käses ist; anschließend
- Ausführen der Austrittsphase der Nadeln aus dem Käse, ohne eine Injektion von aromatisierter Flüssigkeit auszuführen.

8. Verfahren nach dem vorstehenden Anspruch, wobei die Geschwindigkeit der Nadeln in Bezug auf den Käse während der Eindringphase 8 cm/s, beziehungsweise 7 cm/s, beziehungsweise 6 cm/s nicht übersteigt.

9. Verfahren nach einem der vorstehenden Ansprüche, wobei der Schritt b) bei einem gegebenen Käse nur ein einziges Mal ausgeführt wird.

10. Verfahren nach einem der vorstehenden Ansprüche, wobei der Schritt c) des Pökelns durch Eintauchen des nach Abschluss des Schritts b) erhaltenen Käses in einer Wanne ausgeführt wird, die Pökellake beinhaltet.

11. Verfahren nach einem der vorstehenden Ansprüche, wobei der Schritt c) des Pökelns mindestens 30 Min. nach dem Ende des Schritts b), und vorzugsweise mindestens 60 mm, ja sogar mindestens 90 mm nach dem Ende des Schritts b) ausgeführt wird.

12. Verfahren nach einem der vorstehenden Ansprüche, wobei, um den Schritt d) des Evakuierens auszuführen, der nach Abschluss des Schritts c) erhaltene Käse in einer luftdichten Verpackung, zum Beispiel einer Kunststofffolie, verpackt wird.

13. Verfahren nach einem der vorstehenden Ansprüche, wobei der Schritt d) des Evakuierens während mindestens 3 Wochen zum Beispiel bei einer Temperatur von 14 °C ausgeführt wird.

14. Verfahren nach einem der vorstehenden Ansprüche, wobei dem Schritt d) des Evakuierens ein Schritt der Reifung folgt, der an der freien Luft erfolgt.

15. Verfahren nach einem der vorstehenden Ansprüche, wobei, wenn der aromatisierte Käse, der hergestellt werden soll, ein Hartkäse ist, der Schritt a) die folgenden Teilschritte umsetzt:
a₁) Herstellung im Bottich
a₂) Formen in der Vorpresswanne
a₃) Pressen in der Form; und
a₄) Abtropfen.

## Claims

1. Method for producing a flavoured cheese, comprising a step a) of producing the cheese, **characterised in that** it comprises, after this step of producing the cheese, the following steps, in order:
b) pricking the cheese with hollow needles, moved by a back and forth movement with respect to the cheese, said movement comprising a phase of entering said needles into the cheese, followed by a phase of removing said needles from the cheese and, injection of a flavoured liquid into the cheese with said needles;
c) salting the cheese; and
d) vacuum-packing the cheese.

2. Method according to claim 1, wherein the needles are distributed such that the density of needles by unit cheese surface area is between 0.3 and 0.8 needles/cm².

3. Method according to one of the preceding claims, wherein, the needles each having an inner diameter of between 1.5 mm and 3.5 mm, preferably between 1.5 mm and 2.5 mm, the injection of flavoured liquid during step b) is carried out at a pressure of between 0.5 bars and 4 bars, preferably between 0.5 bars and 1.5 bars and the relative speed of the needles with respect to the cheese during step b), does not exceed 13 cm/s, even 10 cm/s.

4. Method according to one of the preceding claims, wherein, to implement step b), the injection of flavoured liquid into the cheese is carried out after the needles have reached a determined depth (P_{D}), non-zero, in the thickness (E) of the cheese.

5. Method according to one of the preceding claims, wherein, to implement step b), the needles cover a distance (P_{LIM}) taken from the surface for entering the needles into the cheese, which is strictly less than the thickness of the cheese.

6. Method according to one of the preceding claims, wherein, to implement step b), the injection of flavoured liquid is carried out during the phase of entering the needles into the cheese and/or during the phase of removing the needles from the cheese.

7. Method according to one of the preceding claims, wherein step b) is carried out according to the following sub-steps:
- carrying out the phase of entering the needles into the cheese in the following way:
* pricking the cheese with the needles until the needles reach a determined depth (P_{D}), non-zero, in the thickness (E) of the cheese; then
* injecting the flavoured liquid into the cheese, while moving the needles deeper into the cheese until a depth (P_{LIM}) strictly less than the thickness of the cheese is reached; then
- carrying out the phase of removing the needles from the cheese, without carrying out any injection of flavoured liquid.

8. Method according to the preceding claim, wherein the speed of the needles with respect to the cheese during the entry phase does not exceed 8 cm/s, even 7 cm/s, even 6 cm/s.

9. Method according to one of the preceding claims, wherein step b) is only carried out once for a given cheese.

10. Method according to one of the preceding claims, wherein the salting step c) is carried out by soaking the cheese obtained from step b) in a container comprising brine.

11. Method according to one of the preceding claims, wherein the salting step c) is implemented, as a minimum, 30 minutes after the end of step b), and preferably at least 60 minutes, even at least 90 minutes after the end of step b).

12. Method according to one of the preceding claims, wherein, to carry out the vacuum-packing step d), the cheese obtained from step c) is packaged in air-tight packaging, for example a plastic film.

13. Method according to one of the preceding claims, wherein the vacuum-packing step d) is carried out for at least 3 weeks, for example at a temperature of 14 °C.

14. Method according to one of the preceding claims, wherein the vacuum-packing step d) is followed by a refining step, being carried out in the fresh air.

15. Method according to one of the preceding claims, wherein, with the flavoured cheese to be produced being a pressed cheese, step a) comprises the following sub-steps:
a₁) producing in a tank
a₂) moulding in a pre-pressing container
a₃) mould-pressing; and
a₄) draining.
